# EUROPEAN PATENT APPLICATION

(11) **EP 0 579 929 A1**
(43) Date of publication of application: **26.01.1994**
(21) Application number: 93108475.0
(22) Date of filing: 26.05.1993
(51) Int. Cl.: H02G 3/26

(54) **Improvements relating to supporting brackets**

(30) Priority: 18.07.1992 GB 9215322
(71) Applicant: SWIFTS OF SCARBOROUGH LIMITED, Eastfield Scarborough YO11 3BY (GB)
(72) Inventor: Davies, Gareth, East Ayton, Scarborough YO13 9HJ (GB)
(74) Representative: Denmark, James

(57) **Abstract**

A supporting bracket for cable trays, cable ladders etc., wherein the bracket has a U-shaped cradle for receiving the tray. At least one of the cradle arms is bendable and provided with hook means for retaining the side of the cable tray. The bracket may be fixed to a wall or the like, and may co-operate with means, such as screws or clips, for retaining the tray more permanently in position. The bracket is best used in vertical disposition, but may also be mounted horizontally or otherwise.

## Description

This invention relates to a supporting bracket, especially but not exclusively, for supporting a cable tray or cable ladder of a cable support system.

Cable trays and cable ladders are used for the support of service cables, pipes and other items in buildings and structures, and typically a cable tray comprises an elongated member of shallow U-section, the base having perforations for the receipt of clips or tie wires which hold the cables or service pipes to the base of the tray. The cable ladder is constructed essentially similar to a conventional ladder in that it has stringers which are parallel, and which are bridged by rungs. The cables and service pipes supported by the ladder are supported by the rungs to which they may be attached by ties or straps or the like.

The present invention is concerned with the support of in particular cable tray especially when arranged in vertical disposition i.e. with the base in a vertical plane.

Conventionally, when such a cable tray is mounted in vertical disposition, its installation requires the presence of two operators, because these cable trays come in long lengths and as they are fabricated in metal are of noticeable weight and typically it is necessary for one operator to hold the tray whilst the other passes fixing screws through the tray base to connect it to a conventional bracket previously applied to a support surface such as a wall.

With the support bracket according to the present invention, only a single operator is required for the mounting and fixing of the cable tray in retro disposition in that the bracket according to the present invention defines a U-shaped cradle for receipt of the cable tray with its base parallel to the base of the cradle, and its sides engaged by the cradle arms, and at least one of the cradle arms is of a bendable metal and is provided with a hook portion so that the arm can be bent away from the other arm to provide clearance for receipt of the cable tray, and when the cable tray is inserted, it can be bent back to a position in which he hook engages the edge of the inserted tray to hold same in position.

The tray may subsequently be fixed by fixing means such as screws or clips to the bracket or other surface in order more permanently to hold it in position.

The bracket according to the invention is preferably for use in vertical disposition and may to the opposite side of the cradle have feet with fixing holes permitting the bracket to be screwed for example through a support wall or framework.

The bracket preferably is fabricated from sheet metal such as steel and the cradle arm which is bendable may be provided with an aperture to define a region at which it will undergo the said bending when subjected to manual effort.

The other cradle arm may also have a hook portion for retaining the side of the cable tray.

It will be appreciated that the bracket can be used for holding cable ladder or other appropriately shaped components, and although it is designed for best use for holding cable tray or cable ladder in vertical disposition, it can be utilised in horizontal or other dispositions.

The bracket may be constructed of mild steel, and may comprise a strip bent to U-configuration to define the said legs and the cradle base, and the cradle arms may be formed by separate strips welded to the outside of the legs, and extending in the opposite direction to said legs, said strips being welded or otherwise secured to the legs.

The bracket may be mill or hot dip galvanised when it is to be used in a corrosive environment.

An embodiment of the invention will now be described, by way of example, with reference to the accompanying drawings, wherein:-
Fig. 1 is a perspective view of a bracket which is used conventionally for supporting a cable tray in vertical disposition;
Fig. 2 is a perspective view of a bracket according to an embodiment of the invention;
Figs. 3, 4 and 5 show as a sequence how the bracket of Fig. 2 is used to receive and hold a length of cable tray in vertical disposition;
Fig. 6 is a side view of the bracket shown in Fig. 2;
Figs. 7, 8 and 9 respectively are a plan view of a blank erectable into a body portion of the bracket shown in Fig. 6 and a side view and end view of the bracket of Fig. 7 when erected;
Figs. 10 and 11 are a side view and a developed plan of an end plate of the bracket shown in Fig. 6;
Figs. 12 and 13 are a side and end view of a bracket according to a further embodiment of the invention;
Fig. 14 is a plan view of the main plate of the bracket shown in Fig. 12 in developed plan form;
Fig. 15 is a side view of the plate shown in Fig. 14 when erected;
Figs. 16 and 17 are a developed plan view of an end plate of the bracket shown in Fig. 12 and the plate when in bent form; and
Figs. 18 and 19 are views similar to Figs. 16 and 17 of the plate at the other end of the bracket of Fig. 12.

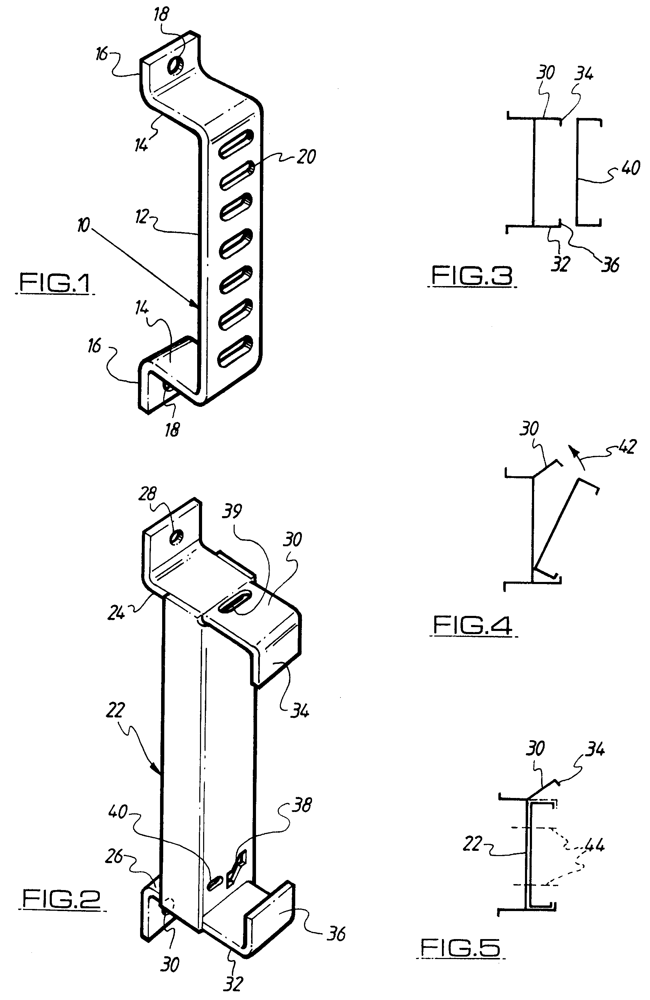

Referring to the drawings, and firstly to Fig. 1, a conventional bracket 10 comprises simply an elongated metallic plate which is bent into shallow U-configuration to define a base 12, legs 14 and feet 16. The feet 16 have fixing apertures 18 by which the bracket may be attached to a wall or framework.

The base 10 is provided with fixing apertures 20 so that a cable tray in vertical disposition may be readily connected thereto by means of fixing screws which pass through the apertures 20 and apertures in the base of the cable tray.

The problem with this bracket is that it requires usually two men to connect the cable tray to the bracket insofar as one man is usually required to hold the tray while the other applies the fixing bolts and nuts and the like.

The bracket according to the present invention aims to overcome this disadvantage, and one embodiment thereof is shown in Fig. 2.

The bracket shown in Fig. 2 comprises a body 22 provided similar to bracket 10 with legs 24 and 26, and these legs have fixing apertures 28 and 30.

Additionally however the bracket has retaining fingers 30 and 32 provided with hook portions 34 and 36 which are arranged facing as shown to serve to receive the cable tray and hold same whilst for example the fixing bolts are applied. In this connection the body 22 has fixing apertures 38 and 40 of the configuration shown for the purposes as set forth in our co-pending Patent Application No 9019495.2.

The finger 30 is in fact adapted to be bent upwardly by virtue of having a weakening aperture 38 therein (although this aperture is not strictly necessary if the metal of the finger is of sufficient ductility) to widen the gap between the hook portions 34 and 36 to enable the tray to be inserted, following which the finger 30 is again bent downwardly so that the hook portions 34 and 36 will retain the tray.

Figs. 3, 4 and 5 show diagrammatically the sequence of operations in positioning a tray in the bracket.

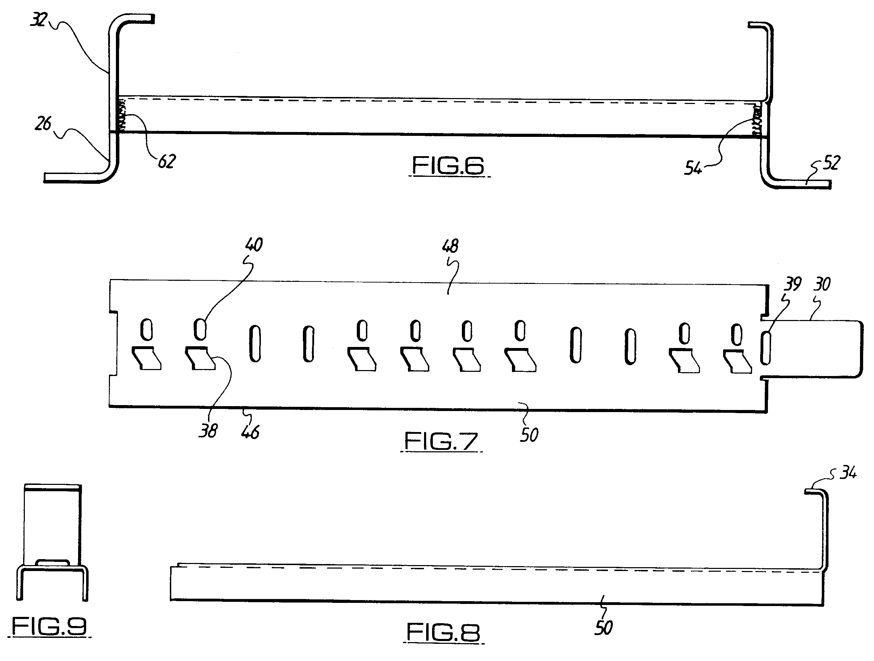

In these figures the tray is indicated by reference 40, and it will be seen that the tray 40 is of a size to be a close fit between the fingers 30 and 32 so that it cannot simply be pushed between the hook portions 34 and 36 without the finger 30 being bent upwardly as shown in Fig. 4 by the arrow 42. When the finger is so bent upwardly the tray can be positioned as shown so as to rest on finger 32 and so that the base of the tray lies adjacent the base of the bracket body 22. It is then simply a matter of bending downwardly the finger 30 so that the hook portion 34 overlaps the tray 40 as shown. The tray is now at least temporarily held in position, and fixing bolts can be applied as indicated by centre lines 44 in Fig. 5 in order to fix the tray to the bracket.

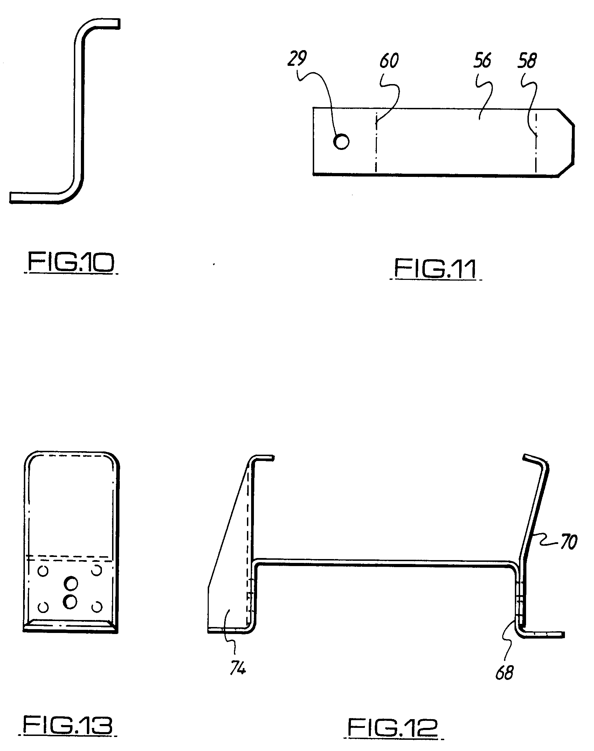

Figs. 6 - 11 illustrate the specific construction of the bracket shown in Fig. 2, and this is constructed of a main body plate 46 shown in Figs. 7 and 8. The plate as indicated in Fig. 7 is a flat blank typically punched from sheet metal, and it has the aperture pattern 38, 40 as shown and the finger 30 is integral therewith. Aperture 39 is also indicated.

The blank shown in Fig. 7 is in the production of the bracket erected to the condition shown in Fig. 8 wherein sides 48, 50 are bent at right angles to the base portion, and the finger 30 is bent upwardly and the hook portion 34 is bent at right angles to the remainder of the finger.

As shown in Fig. 6, a right angled leg 52 is positioned between the sides 48 and 50 and is securely welded thereto as indicated by 54 to the inside of the legs.

The other end plate is formed by a blank 56 shown in Fig. 11 which is bent about lines 58 and 60 to a configuration shown in Fig. 10, so that the plate 56 defines the finger 32 at one end and the leg 26 at the other end. Aperture 29 is also provided in plate 56.

The plate 56 is positioned between the portions of sides 48 and 50 which extend slightly beyond the end of the base of the body 46 and is welded thereto to the inside of the sides as indicated by reference 62 in Fig. 6.

Figs. 6 - 11 illustrate a novel construction for the bracket and the bracket illustrated in Figs. 6 - 11 is for cable tray of a particular size range typically in the range of tray of a width of 450 - 900 mm.

Figs. 12 - 19 illustrate another embodiment of the bracket according to the invention which is suitable for a cable tray of smaller width for example up to 300 mm.

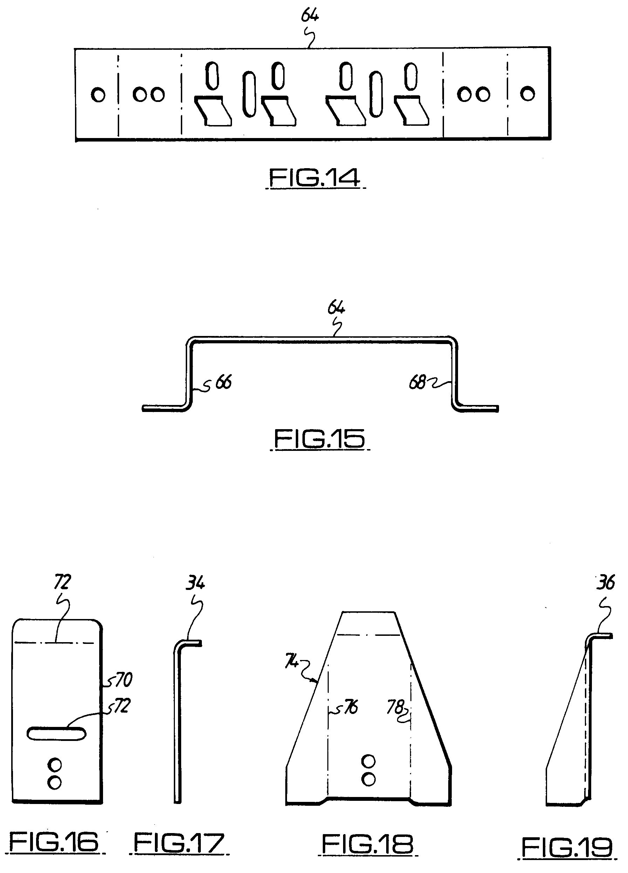

As shown in Figs. 12 - 19, the bracket is made up of a main body plate 64 which is illustrated in Fig. 14 as a stamping, which is bent to the configuration shown in Fig. 15. A pair of end plates are welded to the legs 66 and 68 of the main plate 64 to form the bracket, the plates being attached by spot welding.

One of the plates as shown in Fig. 16 and in Fig. 17, being shown in the blank form in Fig. 16 and in the folded form in Fig. 17. The plate 70 is simply folded about fold line 72 to define the hook portion 34 and is provided with aperture 72 which performs the same function as aperture 39 in the Fig. 2 embodiment.

As shown in Fig. 12, the plate 70 is welded to leg 68 of the main plate 64 and to the outside thereof.

The other end plate which is shown in Figs. 18 and 19, is again formed from a metal stamping shown in the blank form in Fig. 18, and in the erected form in Fig. 19. The blank 74 is generally triangular in shape, and is folded about fold lines 76 and 78 into U-shaped cross section and the top tab is folded to define hook 36.

Plate 74 is spot welded to the other leg 66 of the plate 64 to form the final bracket.

The present invention provides a simple and effective construction for the receipt and holding of cable tray in vertical disposition enabling the installation of the tray by one operator.

The bracket can be used in other applications.

## Claims

1. A supporting bracket, e.g. for supporting a cable tray or cable ladder, said bracket defining a U-shaped cradle for receipt of the cable tray (40) with its base parallel to the base of the cradle, and its sides engaged by the cradle arms (30, 32), characterised in that at least one of the cradle arms (30, 32) is of a bendable metal and is provided with a hook portion (34, 36) so that the arm can be bent away from the other arm to provide clearance for receipt of the cable tray (40), and, when the cable tray (40) is inserted, can be bent back to a position in which the hook (34, 36) engages the edge of the inserted tray (40) to hold same in position.

2. A supporting bracket according to claim 1, characterised in that fixing means as screws or clips may co-operate with the bracket in order to more permanently hold the tray in position.

3. A supporting bracket according to claim 1 or 2, characterised in that the bracket is intended for use in vertical disposition.

4. A supporting bracket according to any of the above claims, characterised in that to the opposite side of the cradle said bracket has feet with fixing holes (28, 30) permitting the bracket to be screwed for example through a support wall or framework.

5. A supporting bracket according to any of the above claims, characterised in that it is fabricated from sheet metal such as steel.

6. A supporting bracket according to any of the above claims, characterised in that the bendable cradle arm is provided with an aperture (39) to define a region at which the arm will bend when subjected to manual effort.

7. A supporting bracket according to any of the above claims, characterised in that the other cradle arm also has a hook portion for retaining the side of the cable tray (40).

8. A supporting bracket according to any of the above claims, characterised in that the bracket is constructed of mild steel.

9. A supporting bracket according to any of the above claims, characterised in that it comprises a strip (64) bent into U-configuration to define legs (66, 68) and the cradle base.

10. A supporting bracket according to claim 9, characterised in that the cradle arms are formed by separate strips (70, 74) welded or otherwise secured to the outside of said legs (66, 68), and extending in the opposite direction to said legs (66, 68).
